# FASCICULE DE BREVET EUROPEEN

(11) **EP 1 433 678 B1**
(45) Date de publication et mention de la délivrance du brevet: **31.05.2006**
(21) Numéro de dépôt: 03370040.2
(22) Date de dépôt: 24.12.2003
(51) Int. Cl.: B60S 9/04, B60P 1/43, B62D 63/08

(54) **Remorque équipée d'un dispositif de béquille**
Mit einer Stützbeinvorrichtung ausgestatteter Anhänger
Trailer provided with a landing gear device

(30) Priorité: 26.12.2002 FR 0216701
(43) Date de publication de la demande: 30.06.2004
(73) Titulaire: Remorques Hubiere S.A, 59610 Fourmies (FR)
(72) Inventeur: Hubiere, Alain, 59610 Fourmies (FR)
(74) Mandataire: Hennion, Jean-Claude

(56) Documents cités:
- BE-A- 1 004 840
- FR-A- 2 635 740
- US-A- 1 566 803

## Description

L'Invention se rapporte à un dispositif de support pour remorques, lors du chargement et du déchargement.

Par « remorque », on désigne ici notamment des véhicules à plateau et rampes inclinées pour le chargement et le déchargement par l'arrière, du coté opposé au timon d'attelage, ces véhicules étant destinés au transport d'engins de chantier, par exemple.

Ces remorques à plateau sont utilisées aussi bien par des particuliers que par des professionnels, par exemple en tant que porte voiture en cas de dépannage ou de course automobile, ou bien en tant que porte engin de chantier.

Les rampes de chargement sont conventionnellement à tiroirs ou relevables, galvanisées à larmes.

L'invention concerne plus particulièrement les remorques du type général présenté ci-dessus, dont les rampes sont relevables.

Lorsque ces remorques sont utilisées pour le chargement ou le déchargement d'objets lourds tels que par exemple rouleau compresseur, la demanderesse a constaté que les opérateurs ne mettaient pas systématiquement en place les béquilles arrière lorsque de telles béquilles sont prévues sur la remorque.

Dans d'autres cas, la demanderesse a constaté que les béquilles arrière des remorques n'étaient pas correctement placées en appui au sol.

Lors du déchargement ou du chargement d'une mini-pelle, d'un chargeur, ou d'un rouleau compresseur, le défaut de mise en place des béquilles arrière peut avoir de graves conséquences.

Il est en effet courant que le chargement et le déchargement de la remorque soient réalisés sans que la remorque ne soit dételée du véhicule tracteur.

Le passage d'un engin de chantier à charger ou décharger de la remorque, sur les rampes de chargement de cette remorque entraine alors des contraintes élevées sur le timon, le poids du véhicule tracteur s'opposant au basculement de la remorque.

La demanderesse a constaté ainsi que le défaut de mise en place des béquilles arrière stabilisatrices pouvant conduire à la rupture de l'assemblage caisse de remorque / châssis de remorque.

Les systèmes de béquilles connus dans l'art antérieur sont d'une utilisation souvent fastidieuse, l'opérateur étant tenté, pour gagner du temps, de ne pas mettre en place les béquilles.

Des exemples de telles béquilles arrière stabilisatrices pour remorques peuvent être trouvés dans les documents US 4.516.308, EP 0.280.538, WO 96/09196, FR 2.545.427 et sont notamment commercialisés par les sociétés Métal Remorque, Saris, Remorque Handrinoise, Daxara, Ecim.

Par ailleurs, le document US1566803A divulgue un dispositif de béquille pour remorque, comprenant en combinaison:
- une barre de commande mobile entre une première position extrême et une seconde position extrême;
- un pied support mobile, par son propre poids, entre une position extrême haute et une position extrême basse;
- des moyens de verrouillage de la barre de commande dans sa première position extrême;
- des moyens de liaison de la barre de commande au pied support;
- des moyens de verrouillage du pied support dans sa position extrême basse;
- des moyens de liaison de la barre de commande aux moyens de verrouillage du pied support, ces moyens étant tels que le déverrouillage de la barre de commande et son déplacement dans sa seconde position extrême entraîne la chute du pied support jusqu'à sa position extrême basse et son verrouillage en cette position, le retour de la barre de commande dans sa position de verrouillage provoquant le déverrouillage du pied support et sa remontée en position extrême haute.

Dans ce dernier dispositif connu, la barre de commande est constituée par un levier d'actionnement manuel.

L'invention vise à fournir une nouvelle structure de béquille pour remorques porte engins, assurant la mise en place et le retrait automatique de cette béquille lors des opérations de chargement et déchargement de la remorque.

A ces fins, l'invention se rapporte, selon un premier aspect, à une remorque équipée d'au moins une rampe de chargement et d'au moins un dispositif de béquille comprenant en combinaison :
- une barre de commande mobile, par son propre poids, entre une première position extrême permettant le maintien de ladite au moins une rampe de chargement en position relevée et une seconde position extrême ;
- un pied support mobile, par son propre poids, entre une position extrême haute et une position extrême basse ;
- des moyens de verrouillage de la barre de commande dans sa première position extrême ;
- des moyens de liaison de la barre de commande au pied support ;
- des moyens de verrouillage du pied support dans sa position extrême basse ;
- des moyens de liaison de la barre de commande aux moyens de verrouillage du pied support
ces moyens étant tels que le déverrouillage de la barre de commande dans sa première position extrême entraîne la chute du pied support jusqu'à sa position extrême basse et son verrouillage en cette position, le retour de la barre de commande dans sa position de verrouillage provoquant le déverrouillage du pied support et sa remontée en position extrêmehaute.

Selon diverses réalisations, le dispositif de béquille présente les caractères suivants, éventuellement combinés :
- la barre de commande est articulée, dans sa partie extrême inférieure, autour d'un axe transversal, les moyens de verrouillage de cette barre de commande étant disposés dans sa partie extrême supérieure ;
- le pied support est monté coulissant dans un manchon apte et destiné à être solidarisé à un châssis de remorque ;
- les moyens de liaison de la barre de commande au pied support comprennent un câble dont la longueur entre ses zones de fixation au pied support et à la barre de commande est telle qu'il est tendu lorsque la barre de commande est dans sa première position extrême ;
- le câble est tendu lorsque la barre de commande est dans sa deuxième position extrême ;
- les moyens de verrouillage du pied support en position extrême basse comprennent une tige de verrou et un moyen élastique notamment ressort hélicoïdal ;
- les moyens de liaison de la barre de commande aux moyens de verrouillage du pied support comprennent un câble dont la longueur entre ses zones de fixation à la tige de verrou et à la barre de commande est telle qu'il est tendu lorsque la barre de commande est dans sa première position extrême ;
- il comprend un galet de renvoi dans la gorge-duquel vient se loger le câble de commande de verrou.

L'invention se rapporte, selon un deuxième aspect, à une remorque comprenant au moins un dispositif de béquille tel que présenté et telle que le pied support est monté mobile, dans un manchon solidaire du châssis de remorque, entre une première position rétractée dans laquelle il se trouve à une première distance d1 du sol et une deuxième position sortie dans laquelle il se trouve à une distance d2 du sol, inférieure à la distance d1.

Selon diverses réalisations, la remorque présente les caractères suivants, éventuellement combinés :
- elle comprend une rampe de chargement sur laquelle vient se verrouiller la barre de commande dans sa première position extrême ;
- les moyens de verrouillage de la barre de commande à la rampe de chargement comprennent une perforation et une goupille.

D'autres objets et avantages de l'invention apparaîtront au cours de la description suivante de modes de réalisations, description qui va être effectuée en se référant aux dessins annexés, dans lesquels :
- la figure 1 est une vue latérale arrière partielle d'une remorque selon un mode de réalisation de l'invention, la béquille étant en position rentrée, les rampes de chargement étant en position sensiblement verticale ;
- la figure 2 est une vue de détail à plus grande échelle d'une partie de la figure 1 ;
- la figure 3 est une vue latérale arrière partielle d'une remorque, correspondant à la figure 1, la barre de maintien de rampe étant représentée en tiretés dans sa position relevée de la figure 1 et en traits pleins dans une position intermédiaire abaissée, la béquille étant en position basse sortie et les rampes de chargement en position baissée d'appui au sol ;
- la figure 4 est une vue latérale arrière partielle d'une remorque, correspondant aux figures 1 et 3, la barre de maintien de rampe étant représentée en tiretés dans sa position intermédiaire abaissée vue en en traits pleins en figure 3, la barre de maintien de rampe étant représentée en traits pleins dans sa position extrême abaissée, la béquille étant en position basse sortie et les rampes de chargement en position abaissée d'appui au sol.

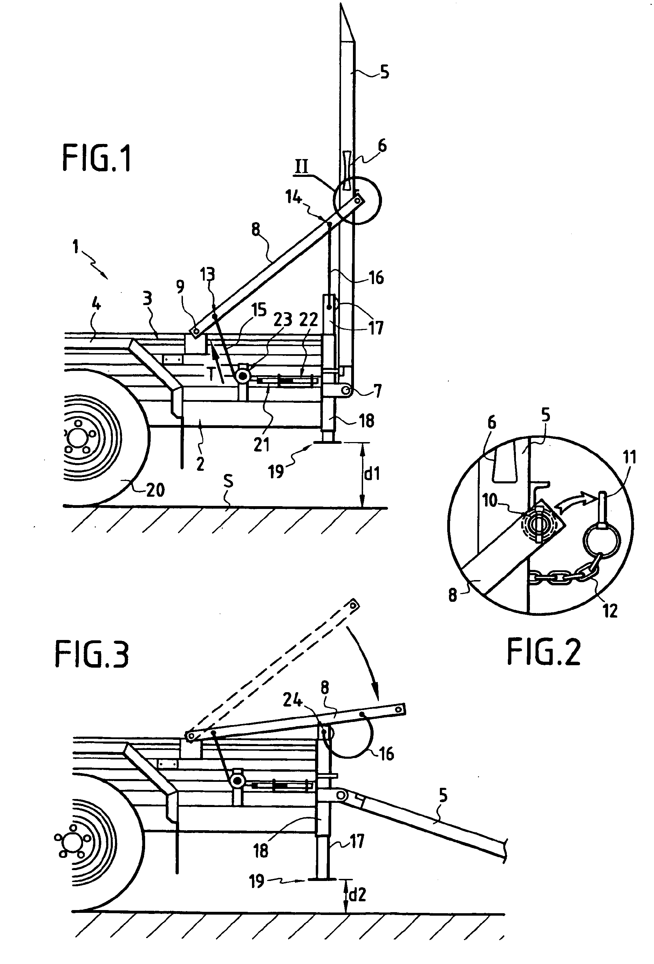

On se rapporte tout d'abord à la figure 1.

La remorque 1 représentée en vue latérale partielle arrière comprend un châssis 2, par exemple mécano-soudé, galvanisé à chaud.

Cette remorque peut être à simple ou double essieu.

La structure des ridelles 3, garde boue 4, du timon et de l'attelage (non représenté) n'ayant aucune importance particulière par rapport à l'invention, ne feront donc pas l'objet d'une description détaillée.

Il en ira de même des pare-cyclistes, des dispositifs d'éclairage, des dispositifs de freinage à inertie et recul automatique, du plancher bois ou acier, de la roue jockey et d'une manière générale de toutes les caractéristiques connues en elles mêmes pour les remorques à plateaux et remorques porte-engins.

Ainsi que le comprendra par la suite l'homme du métier, la structure de béquille selon l'invention peut être mise en place sur toute remorque conventionnelle existante.

A titre indicatif, la structure de béquille selon invention trouvera avantageusement son application notamment pour des porte-engins d'un poids total à charge compris entre 500 et 3500 kg environ, à double essieux.

La remorque comprend au moins une rampe de chargement 5 pourvue d'une poignée de manoeuvre 6. Cette rampe de chargement est articulée au chassis 2, autour d'une ligne d'articulation sensiblement transversale 7.

En figure 1, cette rampe de chargement 5 est en position sensiblement verticale.

La remorque comprend une barre de maintien 8 de la rampe 5 en position relevée. Cette barre de maintien 8 est articulée sur le châssis 2 ou la ridelle 3 de remorque, autour d'un axe d'articulation 9 sensiblement transversal.

A sa partie extrême opposée à cet axe d'articulation 9, la barre de maintien 8 est pourvue d'un trou de passage 10 pour une goupille 11 de blocage.

Cette goupille de blocage 11 est avantageusement imperdable, étant fixée à la rampe 5, par exemple par une chaîne 12.

Entre sa première partie extrême d'articulation et sa deuxième partie extrême de goupillage, la barre de maintien 8 comprend deux zones de fixation 13, 14, pour respectivement un câble de commande de verrou à ressort 15 et un câble de commande de béquille 16.

Le câble de commande de béquille 16 relie la barre de maintien 8 à la partie supérieure d'une béquille 17, montée coulissante dans un manchon 18.

Dans le mode de réalisation représenté, le manchon est sensiblement perpendiculaire au plancher de la remorque. Ce manchon est par exemple de section transversale carrée, circulaire ou polygonal.

Dans l'état représenté en figure 1, la béquille 17 est en position haute rentrée, suspendue par le câble de commande 16 accroché à la barre de maintien 8, cette barre de maintien étant en position extrême relevée et verrouillée dans cette position par la goupille 11, ou tout autre moyen équivalent.

Dans cette première position, la plaque transversale inférieure 19 est à une première distance d1 par rapport à la surface d'appui 5 des roues 20 de la remorque 1.

Le câble de commande 15 du verrou à ressort est maintenu en tension, dans l'état représenté en figure 1. En effet, ce câble de commande 15 est fixé d'une part, à la barre de maintien 8, dans la zone de fixation 13 et, d'autre part, à une tige de verrou 21 montée coulissante dans les anneaux d'un ressort hélicoïdal de compression 22, la compression de ce ressort 22 contre une butée étant obtenue lors de la traction, selon la flèche T, du câble de commande 15.

Entre la zone de fixation 13 et la tige de verrou 21, le câble 15 passe dans une gorge d'un galet de renvoi 23 dont l'axe de rotation est sensiblement transversal.

Lorsque la rampe 5 est dans sa position de la figure 1, elle vient avantageusement en butée contre des patins 24 disposés sur la béquille 17. Cette disposition évite les bruits lors du roulage de la remorque.

Le dispositif qui vient d'être décrit, en référence à la figure 1, peut être disposé de chaque coté d'une remorque à deux rampes de chargement.

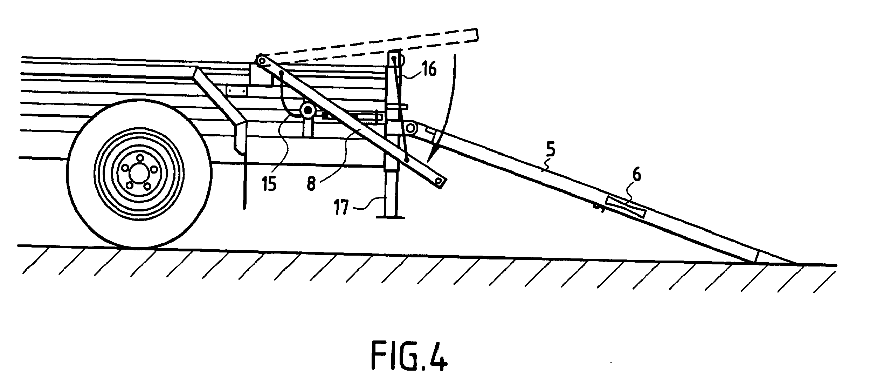

Le fonctionnement de ce dispositif va maintenant être décrit, en référence aux figures 3 et 4.

Pour décharger la remorque, par exemple pour décharger une mini-grue ou une automobile transportée sur la remorque, les actions suivantes sont à effectuer :
a) déverrouiller la barre de maintien 8, en enlevant la goupille de blocage 11 ;
b) abaisser la rampe de chargement 5, à l'aide de la poignée 6, jusqu'à ce que la rampe 5 soit en appui au sol S ;
c) maintenir, durant l'étape b, la barre 8 en position relevée, la béquille 17 restant ainsi en position haute rentrée, par sa suspension au câble 16 ;
d) abaisser la barre de maintien 8 progressivement. A mi-course de cette barre 8, la béquille 17 est parvenue à sa position basse sortie (figure 3), la plaque inférieure transversale 19 de la béquille 17 étant à une deuxième distance d2 du sol, inférieure à la première distance d1. Cette position extrême basse de la béquille 17 est définie par la butée sur le manchon 18 d'une saillie de la béquille ou du boulon de fixation 24 du câble de commande 16 ;
e) abaisser encore la barre de maintien 8 jusqu'à sa position extrême basse de la figure 4. Dans cette position extrême basse, le câble 16 retient la barre 8 de sorte qu'elle ne touche pas le sol S. Lors de l'abaissement de la barre 8, le câble de commande de verrou 15 se détend progressivement, ce qui libère la tige de verrou 21 par l'intermédiaire du ressort 22. Cette tige de verrou entre alors dans un trou de verrouillage (non représenté) traversant la béquille 17 et son manchon ou fourreau 18.

Les engins lourds (mini-pelle, rouleau compresseur, véhicule de rallye, véhicule en panne) peuvent alors monter sur la remorque ou descendre de celle-ci sans danger : dès lors qu'une pression est exercée sur les rampes 5, les béquilles 17 viennent en appui au sol.

L'opération de relevage de la béquille s'effectue automatiquement dans le sens inverse en remontant la rampe de chargement 5 et la barre de maintien 8.

Il est à noter qu'un utilisateur peu soigneux devra en tout état de cause, pour libérer les rampes de leur position relevée, déverrouiller les barres 8. Même en lâchant brutalement les barres 8, l'utilisateur ne pourra empêcher la descente des béquilles jusqu'en leur position extrême basse prédéfinie, et leur verrouillage dans cette position.

De même, l'utilisateur devra nécessairement verrouiller les rampes 5 aux barres de maintien 8 à la fin d'un chargement ou d'un déchargement de la remorque, et ce verrouillage ne pourra être obtenu qu'avec remontée automatique des béquilles.

L'appui des béquilles 17 au sol permet de limiter fortement les contraintes s'exerçant sur l'attelage, la distance d2 pouvant être prédéfinie par l'utilisateur en fonction des charges devant passer sur les rampes 5.

## Revendications

1. Remorque comportant au moins une rampe de chargement et au moins un dispositif de béquille, ladite remarque comprenant en combinaison :
- une barre de commande (8) mobile, par son propre poids, entre une première position extrême permettant le maintien de ladite au moins une rampe de chargement en position relevée et une seconde position extrême ;
- un pied support (17) mobile, par son propre poids, entre une position extrême haute et une position extrême basse ;
- des moyens de verrouillage (10, 11) de la barre de commande 8 dans sa première position extrême ;
- des moyens de liaison (16) de la barre de commande (8) au pied support (17) ;
- des moyens de verrouillage (21) du pied support (17) dans sa position extrême basse ;
- des moyens de liaison (15) de la barre de commande (8) aux moyens de verrouillage (21) du pied support (17),
ces moyens (10, 11, 15, 16, 21) étant tels que le déverrouillage de la barre de commande (8) dans sa première position extrême entraîne la chute du pied support (17) jusqu'à sa position extrême basse et son verrouillage en cette position, le retour de la barre de commande (8) dans sa position de verrouillage provoquant le déverrouillage du pied support (17) et sa remontée en position extrême haute.

2. Remorque selon la revendication 1 **caractérisée en ce que** la barre de commande (8) est articulée, dans sa partie extrême inférieure, autour d'un axe transversal, les moyens de verrouillage (10, 11) de cette barre de commande étant disposés dans sa partie extrême supérieure.

3. Remorque selon la revendication 1 ou 2, **caractérisée en ce que** le pied support (17) est monté coulissant dans un manchon (18) apte et destiné à être solidarisé à un châssis (2) de remorque (1).

4. Remorque selon l'une quelconque des revendications 1 à 3, **caractérisée en ce que** les moyens de liaison de la barre de commande (8) au pied support (17) comprennent un câble (16) dont la longueur entre ses zones de fixation au pied support (17) et à la barre de commande (8) est telle qu'il est tendu lorsque la barre de commande (8) est dans sa première position extrême.

5. Remorque selon la revendication 4, **caractérisée en ce que** le câble (16) est tendu lorsque la barre de commande (8) est dans sa deuxième position extrême.

6. Remorque selon l'une quelconque des revendications 1 à 5, **caractérisée en ce que** les moyens de verrouillage du pied support (17) en position extrême basse comprennent une tige de verrou (21) et un moyen élastique notamment ressort hélicoïdal.

7. Remorque selon la revendication 6, **caractérisée en ce que** les moyens de liaison (15) de la barre de commande (8) aux moyens de verrouillage (21) du pied support (17) comprennent un câble (15) dont la longueur entre ses zones de fixation à la tige de verrou (21) et à la barre de commande (8) est telle qu'il est tendu lorsque la barre de commande (8) est dans sa première position extrême.

8. Remorque selon la revendication 7, **caractérisée en ce qu'**il comprend un galet de renvoi (25) dans la gorge duquel vient se loger le câble (15) de commande de verrou.

9. Remorque selon l'une quelconque des revendications 1 à 8, **caractérisée en ce que** le pied support (17) est monté mobile, dans un manchon (18) solidaire du châssis (2) de remorque, entre une première position rétractée dans laquelle il se trouve à une première distance d1 du sol et une deuxième position sortie dans laquelle il se trouve à une distance d2 du sol, inférieure à la distance d1.

10. Remorque selon la revendication 9, **caractérisée en ce qu'**elle comprend une rampe de chargement (5) sur laquelle vient se verrouiller la barre de commande (8) dans sa première position extrême.

11. Remorque selon la revendication 10, **caractérisée en ce que** les moyens de verrouillage de la barre de commande (8) à la rampe de chargement comprennent une perforation et une goupille.

## Claims

1. A trailer that includes at least one loading ramp and at least one prop device, where the said trailer includes the following in combination:
- a mobile control bar (8), operated by its own weight, between a first extreme position used for maintenance of the said "at least one loading ramp" in the raised position and a second extreme position;
- a mobile support leg (17), operated by its own weight, between an extreme up position and an extreme down position;
- resources for locking (10, 11) the control bar (8) in its first extreme position;
- resources for connection (16) of the control bar (8) to the support leg (17);
- resources for locking (21) the support leg (17) in its extreme down position;
- resources for connection (15) of the control bar (8) to the resources for locking (21) the support leg (17),
where these resources (10, 11, 15, 16, 21) are such that unlocking the control bar (8) from its first extreme position results in the descent of the support leg (17) to its extreme down position and locking it in this position, and the return of the control bar (8) to its locking position causing unlocking of the support leg (17) and its ascent to the extreme up position.

2. A trailer according to claim 1, **characterised in that** the control bar (8) is articulated in its extreme lower part, about a transverse axis, with the resources for locking (10, 11) of this control bar being located in its upper part.

3. A trailer according to claim 1 or 2, **characterised in that** the support leg (17) is arranged to slide in a handle (18) that is suitable and intended to be attached to the chassis (2) of a trailer (1).

4. A trailer according to any of claims 1 to 3, **characterised in that** the resources for connection of the control bar (8) to the support leg (17) include a cable (16) whose length between its zones of attachment to the support leg (17) and to the control bar (8) is such that it is tensioned when the control bar (8) is in its first extreme position.

5. A trailer according to claim 4, **characterised in that** the cable (16) is tensioned when the control bar (8) is in its second extreme position.

6. A trailer according to any of claims 1 to 5, **characterised in that** the resources for locking the support leg (17) in its extreme down position include a locking bolt (21) and an elastic resource such as a coil spring in particular.

7. A trailer according to claim 6, **characterised in that** the resources for connection (15) of the control bar (8) to the resources for locking (21) the support leg (17) include a cable (15) whose length between its zones of attachment to the locking bolt (21) and to the control bar (8) is such that it is tensioned when the control bar (8) is in its first extreme position.

8. A trailer according to claim 7, **characterised in that** it includes a return roller (25) in the channel in which the lock control cable (15) is located.

9. A trailer according to any of claims 1 to 8, **characterised in that** the support leg (17) is mounted to be mobile, in a sleeve (18) attached to the chassis (2) of a trailer, between a first retracted position in which it is located at a first distance (d1) from the ground and a second deployed position in which it is located at a second distance d2 from the ground, this being less than distance d1.

10. A trailer according to claim 9, **characterised in that** it includes a loading ramp (5) onto which the control bar (8) locks in its first extreme position.

11. A trailer according to claim 10, **characterised in that** the resources for locking of the control bar (8) to the loading ramp include a perforation and a split pin.

## Patentansprüche

1. Anhänger, umfassend mindestens eine Laderampe und mindestens eine Stützbeinvorrichtung, wobei der Anhänger folgendes in Kombination umfaßt:
- eine Kontrollstange (8), die durch ihr Eigengewicht zwischen einer ersten Endstellung, die das Halten der mindestens einen Laderampe in einer hochgeklappten Position erlaubt, und einer zweiten Endstellung, beweglich ist;
- Stützfuß (17), der durch sein Eigengewicht zwischen einer angehobenen Endstellung und einer abgesenkten Endstellung beweglich ist;
- Verriegelungsmittel (10, 11) der Kontrollstange 8 in ihrer ersten Endstellung;
- Verbindungsmittel (16) der Kontrollstange (8) zum Stützfuß (17);
- Verriegelungsmittel (21) des Stützfußes (17) in seiner abgesenkten Endstellung;
- Mittel (15) zum Verbinden der Kontrollstange (8) mit den Verriegelungsmitteln (21) des Stützfußes (17),
wobei diese Mittel (10, 11, 15, 16, 21) derart beschaffen sind, daß die Entriegelung der Kontrollstange (8) in ihrer ersten Endstellung das Herabfallen des Stützfußes (17) bis zu seiner abgesenkten Endstellung und sein Einrasten in dieser Position herbeiführt, wobei das Zurückführen der Kontrollstange (8) in ihre Verriegelungsposition die Entriegelung des Stützfußes (17) und seine Rückkehr in die angehobene Endstellung herbeiführt.

2. Anhänger nach Anspruch 1, **dadurch gekennzeichnet, daß** die Kontrollstange (8) an ihrem unteren Endbereich um eine Querachse angelenkt ist, wobei die Verriegelungsmittel (10, 11) der Kontrollstange in ihrem oberen Endabschnitt angeordnet sind.

3. Anhänger nach einem der Ansprüche 1 oder 2, **dadurch gekennzeichnet, daß** der Stützfuß (17) verschiebbar in einer Muffe (18) montiert ist, die zum Befestigen an einem Fahrgestell (2) vom Anhänger (1) geeignet und vorgesehen ist.

4. Anhänger nach einem der Ansprüche 1 bis 3, **dadurch gekennzeichnet, daß** das Verbindungsmittel der Kontrollstange (8) zum Stützfuß (17) ein Seil (16) umfaßt,
wobei die Länge desselben zwischen seinen Befestigungszonen am Stützfuß (17) und an der Kontrollstange (8) dergestalt ist, daß es gespannt ist, wenn sich die Kontrollstange (8) in ihrer ersten Endstellung befindet.

5. Anhänger nach Anspruch 4, **dadurch gekennzeichnet, daß** das Seil (16) gespannt ist, während sich die Kontrollstange (8) in ihrer zweiten Endstellung befindet.

6. Anhänger nach einem der Ansprüche 1 bis 5, **dadurch gekennzeichnet, daß** die Mittel zur Verriegelung des Stützfußes (17) in der gesenkten Endstellung eine Verriegelungsstange (21) und ein elastisches Element, insbesondere eine Spiralfeder, umfassen.

7. Anhänger nach Anspruch 6, **dadurch gekennzeichnet, daß** die Mittel (15) zum Verbinden der Kontrollstange (8) mit den Verriegelungsmitteln (21) des Stützfußes (17) ein Seil (15) umfassen, dessen Länge zwischen seinen Befestigungsbereichen an der Verriegelungsstange (21) und an der Kontrollstange (8) dergestalt ausgebildet ist, daß es gespannt ist, wenn sich die Kontrollstange (8) in der ersten Endstellung befindet.

8. Anhänger nach Anspruch 7, **dadurch gekennzeichnet, daß** dieser eine Umlenkrolle (25) umfaßt, wobei in der Rille desselben das Seil (15) zur Steuerung der Verriegelung verläuft.

9. Anhänger nach einem der Ansprüche 1 bis 8, **dadurch gekennzeichnet, daß** der Stützfuß (17) in einer an dem Fahrgestell (2) des Anhängers befestigten Muffe (18), zwischen einer ersten eingezogenen Position, in welcher er sich in einem ersten Abstand d1 zum Boden befindet, und einer zweiten ausgefahrenen Position, in welcher er sich in einem Abstand d2 zum Boden befindet, der kleiner als der Abstand d1 ist, beweglich angeordnet ist.

10. Anhänger nach Anspruch 9, **dadurch gekennzeichnet, daß** er eine Laderampe (5) umfaßt, auf der die Kontrollstange (8) in ihrer ersten Endstellung verriegelt wird.

11. Anhänger nach Anspruch 10, **dadurch gekennzeichnet, daß** die Verriegelungsmittel der Kontrollstange (8) an der Laderampe eine Bohrung und einen Stift umfassen.
